# EUROPEAN PATENT APPLICATION

(11) **EP 3 467 395 A1**
(43) Date of publication of application: **10.04.2019**
(21) Application number: 17802873.4
(22) Date of filing: 25.05.2017
(51) Int. Cl.: F24F 11/02, F24F 5/00, F25B 1/00

(54) **HEAT SOURCE SYSTEM AND HEAT SOURCE SYSTEM CONTROL METHOD**

(30) Priority: 27.05.2016 JP 2016106137
(71) Applicant: Toshiba Carrier Corporation, Kawasaki-shi, Kanagawa 212-8585 (JP)
(72) Inventor: YAMAMOTO, Manabu, Fuji-shi Shizuoka 416-8521 (JP); MATSUMOTO, Yuji, Fuji-shi Shizuoka 416-8521 (JP); TSUKIYAMA, Seiji, Fuji-shi Shizuoka 416-8521 (JP)
(74) Representative: Gramm, Lins & Partner Patent- und Rechtsanwälte PartGmbB
(86) International application number: PCT/JP2017/019500
(87) International publication number: WO 2017/204287

(57) **Abstract**

A control section of a heat source system controls the number of heat source machines to be operated and an amount of adjustment of each of flow rate regulating valves according to the required performance of air heat exchangers, identifies groups each of which includes air heat exchangers in operation from an operational status of a plurality of air heat exchangers, selects one set of piping resistance characteristics from a plurality of sets of piping resistance characteristics of the identified groups, controls an amount of adjustment of a pressure-regulating valve in such a manner that a pressure difference sensed by a differential pressure sensor coincides with a pressure difference calculated on the basis of the selected piping resistance characteristics, and controls a pump operation frequency of each of the heat source machines in operation on the basis of a sensed flow rate of a flow rate sensor.

## Description

### Technical Field

Embodiments described herein relate generally to a heat source system and heat source system control method.

### Background Art

A heat source system provided with a plurality of heat source machines and configured to supply heat or cold obtained by the operation of these heat source machines to the load side (utilization side) is known.

The heat source machines are connected in parallel to each other through heating medium piping, and each of the heat source machines takes therein a heating medium by an operation of a pump and heats or cools the taken-in heating medium by an operation of a heat pump refrigerating cycle.

Further, a technique for determining a flow rate set value of each heating medium pump, substituting the flow rate set value into a formula for computation of a pump operation frequency to thereby obtain an operation frequency, and operating the heating medium pump at the obtained operation frequency is known.

### Summary of Invention

### Technical Problem

In the aforementioned heat source system, loads are connected in parallel to each other through the heating medium piping, and hence the piping resistance characteristics at the time of supplying the heating medium from the heat source machine to each load differ depending on the length of the heating medium piping and size of the valve.

Accordingly, the heat source system is contrived in such a manner that when a trial operation is carried out, piping resistance characteristics of a case where, for example, only a load connected in parallel to the tail end of the loads is operated are acquired and, when an actual operation is carried out, the piping resistance characteristics acquired at the time of the trial operation are utilized to operate the heat source machine. When the heat source machine is operated in the manner described above, the flow rate of the pump of each heat source machine becomes low, and pump conveyance power is reduced, whereby an energy saving operation is achieved. Further, a situation in which the pump of the heat source machine stalls to cause an abnormal stop is prevented from occurring.

Incidentally, there is sometimes a case where the number of loads to be connected in parallel to each other is several tens and, there can be a state where the loads in operation and loads not in operation exist alongside. In such a state, when the load at the tail end is not in operation, the piping resistance characteristics are set in accordance with the load at the tail end, and hence a heating medium of an amount more than necessary is supplied from the heat source machine to the load.

An embodiment described herein aims to provide a heat source system and heat source system control method making it possible to appropriately operation-control heat source machines according to an operational status of loads.

### Solution to Problem

A heat source system of an embodiments includes a plurality of heat source machines each of which is provided with heating medium heat exchangers and a pump configured to circulate a heating medium between the heating medium heat exchangers and a plurality of loads, and is configured to heat or cool the heating medium flowing through the heating medium heat exchangers; piping configured to return the heating medium flowing from the plurality of heat source machines to the plurality of loads to the plurality of heat source machines; storage means for storing therein piping resistance characteristics at the time when the heating medium is sent from the plurality of heat source machines to the plurality of loads divided into groups in correlation with each divided group; and control means for identifying groups each of which includes loads in operation from an operational status of the plurality of loads according to the required performance of the plurality of loads, selecting one set of piping resistance characteristics from a plurality of sets of piping resistance characteristics of the identified groups, and controlling a pump operation frequency of each of the heat source machines in operation on the basis of the selected piping resistance characteristics.

Further, a heat source system control method of a heat source system of an embodiment includes elements as follows. The heat source system includes a plurality of heat source machines each of which is provided with heating medium heat exchangers and a pump configured to circulate a heating medium between the heating medium heat exchangers and a plurality of loads, and is configured to heat or cool the heating medium flowing through the heating medium heat exchangers, piping configured to return the heating medium flowing from the plurality of heat source machines to the plurality of loads to the plurality of heat source machines, and storage means for storing therein piping resistance characteristics at the time when the heating medium is sent from the plurality of heat source machines to the plurality of loads divided into groups in correlation with each divided group. The heat source system identifies groups each of which includes loads in operation from an operational status of the plurality of loads according to the required performance of the plurality of loads, selects one set of piping resistance characteristics from a plurality of sets of piping resistance characteristics of the identified groups, and controls a pump operation frequency of each of the heat source machines in operation on the basis of the selected piping resistance characteristics.

### Advantageous Effects of Invention

According to an embodiment, it is possible to provide a heat source system and heat source system control method making it possible to appropriately operation-control heat source machines according to an operational status of loads.

### Brief Description of Drawings

FIG. 1 is a view showing the overall configuration of an embodiment.
FIG. 2 is a view showing the configuration of a refrigerating cycle of a heat source machine in the embodiment.
FIG. 3 is a flowchart showing the control of the embodiment.
FIG. 4 is a view showing the load side piping resistance characteristics of the embodiment.
FIG. 5 is a view for explaining a function of the embodiment.

### Mode for Carrying Out the Invention

An embodiment of a heat source system of the present invention will be described below with reference to the accompanying drawings.

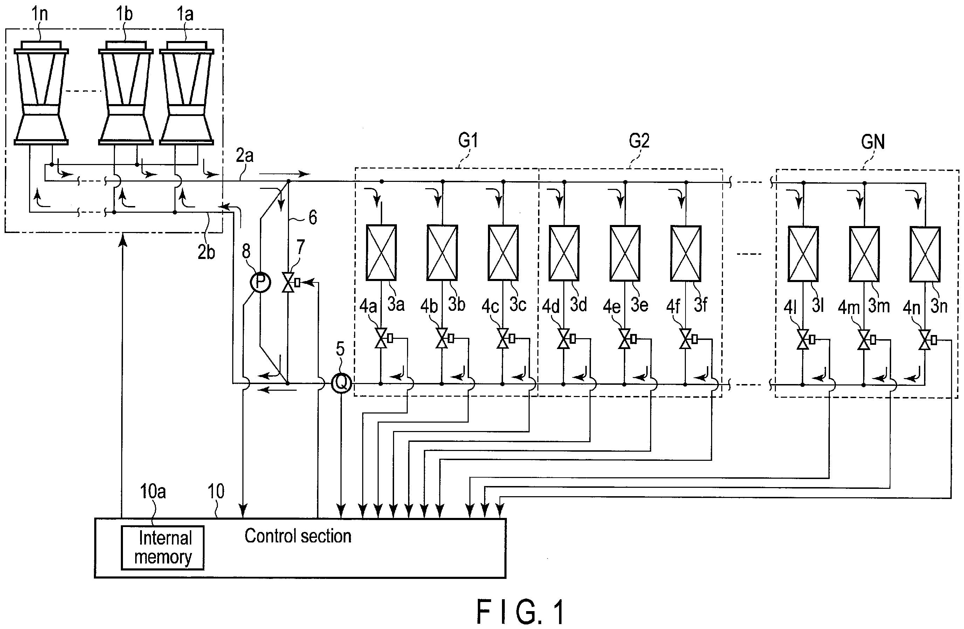

As shown in FIG. 1, a plurality of loads which are load-side devices, for example, air heat exchangers 3a, 3b, 3c, 3d, 3e, 3f, ···3l, 3m, and 3n are connected to a plurality of heat source machines 1a, 1b, ···1n through heating medium piping 2a (hereinafter referred to as water piping 2a) and heating medium piping 2b (hereinafter referred to as water piping 2b). The heat source machines 1a, 1b, ···1n are in a state where the machines are connected to each other through the water piping 2a and 2b on the so-called reverse return system. The air heat exchangers 3a, 3b, ···3n are also in a state where the air heat exchangers are connected in parallel to each other through the water piping 2a and 2b. It should be noted that in this embodiment, although the heat source machines 1a, 1b, ···1n will be described in connection with the case where the machines are connected to each other on the reverse return system, the machines may also be connected on other systems.

Furthermore, the air heat exchangers 3a, 3b, 3c, 3d, 3e, 3f, ···3l, 3m, and 3n are divided into groups. Although it is sufficient if the number of air heat exchangers included in each group is at least one, in this embodiment, in group G1, the air heat exchangers 3a, 3b, and 3c are included, in group G2, air heat exchangers 3d, 3e, and 3f are included, ···, and in group GN, air heat exchangers 3l, 3m, and 3n are included. This grouping can be considered to be carried out according to the place at which the air heat exchangers are installed. More specifically, when the heat source system is installed in a building, a case where the air heat exchangers are divided into groups of the first floor, second floor, ···, case where the air heat exchangers are divided into groups of work areas (rooms), and case or the like where the above grouping manners coexist are assumed. Accordingly, it can also be said that each group is a zone in which air heat exchangers are installed.

Each of the heat source machines 1a, 1b, ···1n is provided with a heat pump refrigerating cycle, heating medium heat exchangers (hereinafter referred to as water heat exchangers), and pump, introduces water (heating medium) of the water piping 2b into the water heat exchangers by the inlet pressure of the pump, heats or cools the water introduced into the water heat exchangers by the operation of the heat pump refrigerating cycle, and supplies the water of the water heat exchangers to the water piping 2a by the discharge pressure of the pump. Each of the air heat exchangers 3a, 3b, 3c, 3d, 3e, 3f, ···3l, 3m, and 3n imparts the heat of the water flowing therein from the water piping 2a to the indoor air sent from the indoor fan, and makes the water after being subjected to the heat exchange flow into the water piping 2b.

Each of flow rate regulating valves 4a, 4b, 4c, 4d, 4e, 4f, ···4l, 4m, and 4n is arranged in a branch pipe of the water piping 2b, the branch pipe being connected to a water outlet port of each of the air heat exchangers 3a, 3b, 3c, 3d, 3e, 3f, ···3l, 3m, and 3n. Each of the flow rate regulating valves 4a, 4b, 4c, 4d, 4e, 4f, ···4l, 4m, and 4n adjusts the flow rate of water flowing through each of the air heat exchangers 3a, 3b, 3c, 3d, 3e, 3f, ···3l, 3m, and 3n by a change in the degree of opening.

In the water piping 2b, at a position on the downstream side of the branch pipes connected to the water outlet ports of the air heat exchangers 3a, 3b, 3c, 3d, 3e, 3f, ···3l, 3m, and 3n, a flow rate sensor (load side flow rate sensing means) 5 is arranged. The flow rate sensor 5 senses the flow rate Q of the water flowing through the air heat exchangers 3a, 3b, 3c, 3d, 3e, 3f, ···3l, 3m, and 3n.

To a position of the water piping 2a between the aggregate of connecting locations of the heat source machines 1a, 1b, ···1n and aggregate of connecting locations of the air heat exchangers 3a, 3b, 3c, 3d, 3e, 3f, ···3l, 3m, and 3n, one end of bypass piping 6 is connected. The other end of the bypass piping 6 is connected to a position of the water piping 2b on the downstream side of the arrangement position of the flow rate sensor 5. The bypass piping 6 bypasses the water flowing from the heat source machines 1a, 1b, ···1n to the air heat exchangers 3a, 3b, 3c, 3d, 3e, 3f, ···3l, 3m, and 3n through itself and returns the bypassed water to the heat source machines 1a, 1b, ···1n side. At a midway position of the bypass piping 6, a pressure-regulating valve 7 is arranged.

A differential pressure sensor (pressure difference sensing means) 8 is arranged between the one end and the other end of the bypass piping 6. The differential pressure sensor 8 senses a difference (pressure difference of water between the both ends of the bypass piping 6) P between the pressure of water at the one end of the bypass piping 6 and pressure of water at the other end thereof. The pressure-regulating valve 7 is also called a bypass valve, and adjusts the pressure difference of the heating medium between the both ends of the bypass piping 6 by a change in the degree of opening.

Each of the heat source machines 1a, 1b, ···1n is provided with water heat exchangers and pump configured to circulate water between the water heat exchangers and air heat exchangers 3a, 3b, 3c, 3d, 3e, 3f, ···3l, 3m, and 3n, and heats or cools the water flowing through the water heat exchangers by the operation of the heat pump refrigerating cycle.

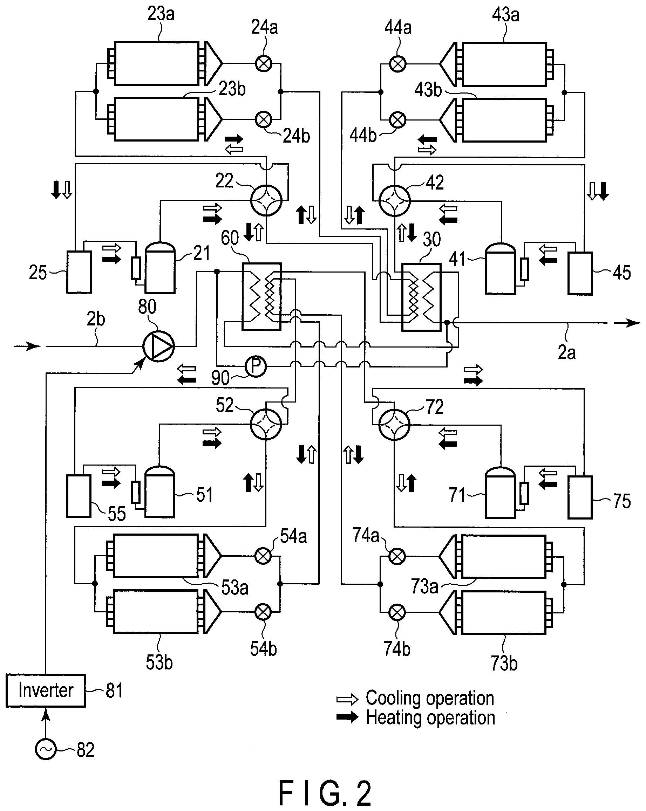

The configuration of the heat pump refrigerating cycle of each of the heat source machines 1a, 1b, ···1n is shown in FIG. 2.

A discharged refrigerant of a compressor 21 flows to air heat exchangers 23a and 23b through a four-way valve 22, the refrigerant which has passed through the air heat exchangers 23a and 23b flows through a first refrigerant flow path of a water heat exchanger 30 through electronic expansion valves 24a and 24b. The refrigerant which has passed through the first refrigerant flow path of the water heat exchanger 30 is sucked into the compressor 21 through the four-way valve 22 and an accumulator 25. This refrigerant flow direction is that at the time of a cooling operation (cool water generating operation), the air heat exchangers 23a and 23b function as a condenser, and the first refrigerant flow path of the water heat exchanger 30 functions as an evaporator. At the time of a heating operation (warm water generating operation), the flow path of the four-way valve 22 is switched in such a manner as to reverse the refrigerant flow direction, the first refrigerant flow path of the water heat exchanger 30 functions as a condenser, and the air heat exchangers 23a and 23b function as an evaporator.

The compressor 21, four-way valve 22, air heat exchangers 23a and 23b, electronic expansion valves 24a and 24b, first refrigerant flow path of the water heat exchanger 30, and accumulator 25 constitute the first heat pump refrigerating cycle.

A discharged refrigerant of a compressor 41 flows to air heat exchangers 43a and 43b through a four-way valve 42, the refrigerant which has passed through the air heat exchangers 43a and 43b flows through a second refrigerant flow path of the water heat exchanger 30 through electronic expansion valves 44a and 44b. The refrigerant which has passed through the second refrigerant flow path of the water heat exchanger 30 is sucked into the compressor 41 through the four-way valve 42 and an accumulator 45. This refrigerant flow direction is that at the time of a cooling operation (cool water generating operation), the air heat exchangers 43a and 43b function as a condenser, and the second refrigerant flow path of the water heat exchanger 30 functions as an evaporator. At the time of a heating operation (warm water generating operation), the flow path of the four-way valve 42 is switched in such a manner as to reverse the refrigerant flow direction, the second refrigerant flow path of the water heat exchanger 30 functions as a condenser, and the air heat exchangers 43a and 43b function as an evaporator.

The compressor 41, four-way valve 42, air heat exchangers 43a and 43b, electronic expansion valves 44a and 44b, second refrigerant flow path of the water heat exchanger 30, and accumulator 45 constitute the second heat pump refrigerating cycle.

A discharged refrigerant of a compressor 51 flows to air heat exchangers 53a and 53b through a four-way valve 52, the refrigerant which has passed through the air heat exchangers 53a and 53b flows through a first refrigerant flow path of a water heat exchanger 60 through electronic expansion valves 54a and 54b. The refrigerant which has passed through the first refrigerant flow path of the water heat exchanger 60 is sucked into the compressor 51 through the four-way valve 52 and an accumulator 55. This refrigerant flow direction is that at the time of a cooling operation (cool water generating operation), the air heat exchangers 53a and 53b function as a condenser, and the first refrigerant flow path of the water heat exchanger 60 functions as an evaporator. At the time of a heating operation (warm water generating operation), the flow path of the four-way valve 52 is switched in such a manner as to reverse the refrigerant flow direction, the first refrigerant flow path of the water heat exchanger 60 functions as a condenser, and the air heat exchangers 53a and 53b function as an evaporator.

The compressor 51, four-way valve 52, air heat exchangers 53a and 53b, electronic expansion valves 54a and 54b, first refrigerant flow path of the water heat exchanger 60, and accumulator 55 constitute the third heat pump refrigerating cycle.

A discharged refrigerant of a compressor 71 flows to air heat exchangers 73a and 73b through a four-way valve 72, the refrigerant which has passed through the air heat exchangers 73a and 73b flows through a second refrigerant flow path of the water heat exchanger 60 through electronic expansion valves 74a and 74b. The refrigerant which has passed through the second refrigerant flow path of the water heat exchanger 60 is sucked into the compressor 71 through the four-way valve 72 and an accumulator 75. This refrigerant flow direction is that at the time of a cooling operation (cool water generating operation), the air heat exchangers 73a and 73b function as a condenser, and the second refrigerant flow path of the water heat exchanger 60 functions as an evaporator. At the time of a heating operation (warm water generating operation), the flow path of the four-way valve 72 is switched in such a manner as to reverse the refrigerant flow direction, the second refrigerant flow path of the water heat exchanger 60 functions as a condenser, and the air heat exchangers 73a and 73b function as an evaporator.

The compressor 71, four-way valve 72, air heat exchangers 73a and 73b, electronic expansion valves 74a and 74b, second refrigerant flow path of the water heat exchanger 60, and accumulator 75 constitute the fourth heat pump refrigerating cycle.

The water of the water piping 2b is passed through the water flow path of the water heat exchanger 60 and water flow path of the water heat exchanger 30, and is lead to the water piping 2a.

In the water piping between the water piping 2b and water flow path of the water heat exchanger 60, a pump 80 is arranged. The pump 80 includes a motor to be operated by an AC voltage supplied from an inverter 81, and the pump head changes according to the rotational speed of the motor. The inverter 81 rectifies a voltage of a commercial AC power source 82, converts the rectified DC voltage into an AC voltage of a predetermined frequency by switching, and supplies the converted AC voltage to the motor of the pump 80 as drive power for the motor. By changing the frequency (operation frequency) F of the output voltage of the inverter 81, the rotational speed of the motor of the pump 80 is changed.

At a position between the water piping of the water heat exchanger 60 on the water inflow side thereof and water piping of the water heat exchanger 30 on the water outflow side thereof, a differential pressure sensor 90 is arranged as pressure difference sensing means. The differential pressure sensor 90 senses a difference (pressure difference of water between the ends of the water heat exchangers 60 and 30) between the pressure of the water flowing into the water heat exchanger 60 and pressure of the water flowing out of the water heat exchanger 30. On the basis of the sensed differential pressure of the differential pressure sensor 90, it is possible to sense a flow rate of the water flowing through the water heat exchangers 60 and 30, i.e., a flow rate of the water flowing through the heat source machine. On the other hand, the heat source machines 1a, 1b, ···1n, flow rate regulating valves 4a, 4b, 4c, 4d, 4e, 4f, ···4l, 4m, and 4n, flow rate sensor 5, pressure-regulating valve 7, and differential pressure sensor 8 are connected to a control section 10 serving as control means.

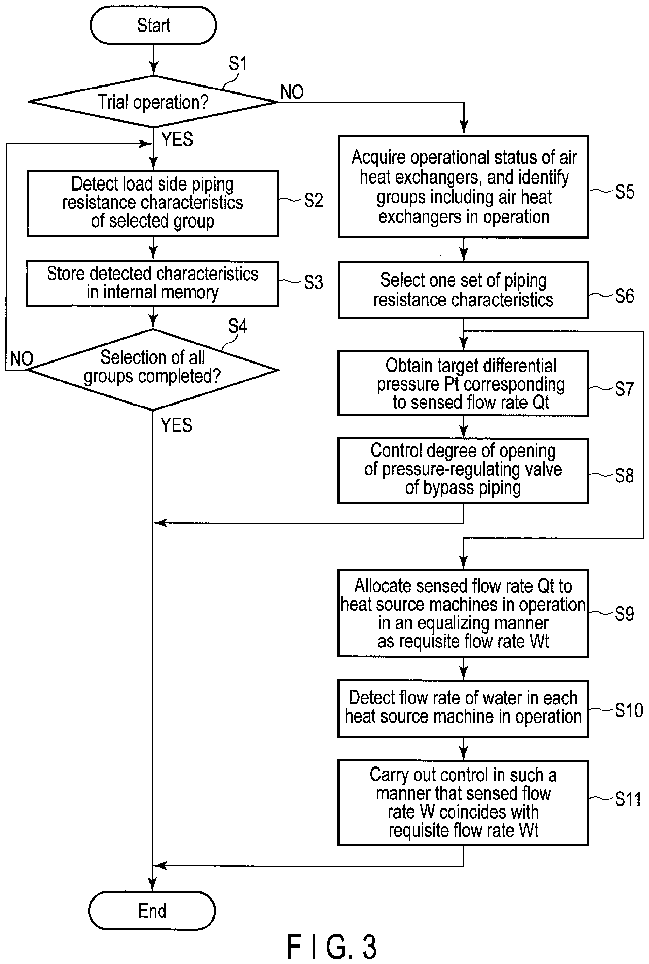

Here, the load side devices are uniquely controlled by a unique load side control section not shown, and opening-degree control of the flow rate regulating valves 4a, 4b, 4c, 4d, 4e, 4f, ···4l, 4m, and 4n is carried out by the load side control section. The control section 10 controls the operation of the heat source system, and receives opening-degree information about the flow rate regulating valves 4a, ···4n provided in the load side devices. An example of control to be executed by the control section 10 will be described below with reference to the flowchart of FIG. 3.

At the time of a trial operation after the heat source system is installed (YES of step S1), the control section 10 detects, with respect to a selected group, the piping resistance characteristics (hereinafter referred to as the load side piping resistance characteristics) at the time when the heating medium is sent from the heat source machines 1a, 1b, ···1n to the air heat exchangers 3a, 3b, 3c, 3d, 3e, 3f, ···3l, 3m, and 3n (step S2).

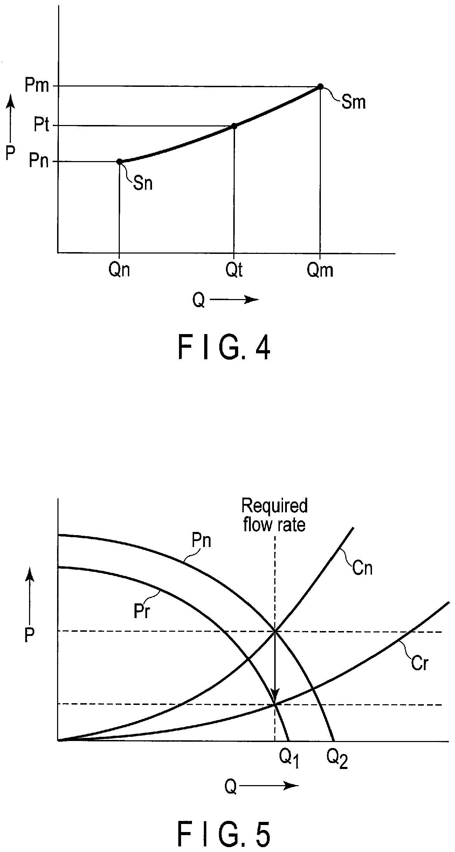

More specifically, the control section 10 totally closes the pressure-regulating valve 7 of the bypass piping 6, further fully opens only a flow rate regulating valve among the flow rate regulating valves 4a, 4b, and 4c included in group G1, the flow rate regulating valve being correspondent to an air heat exchanger having the highest piping resistance, totally closes the remaining flow rate regulating valves (including flow rate regulating valves of other groups), operates, in this state, at least one of the pumps 80 of the heat source machines 1a, 1b, ···1n at a rated flow rate (predetermined operation frequency F) of the air heat exchanger whose flow rate regulating valve is fully opened, and stores the correspondence at this time between the sensed flow rate (minimum flow rate) Qn of the flow rate sensor 5 and sensed differential pressure (sensed pressure difference) Pn of the differential pressure sensor 8 in an internal memory 10a serving as storage means as an intersection point Sn shown in FIG. 4. When the rated performance is not achieved by operating the pump 80 even at the maximum frequency, the number of the pumps to be operated is increased one by one to such an extent that the rated flow rate can be achieved.

As the air heat exchanger the piping resistance of which is the highest, among the air heat exchangers belonging to group G1, for example, the air heat exchanger 3c located at the tail-end position at which the piping length between the tail-end position itself and the aggregate of the heat source machines 1a, 1b, ···1n is the largest is selected in advance. Alternatively, for example, the air heat exchanger 3b closer to the heat source machines 1a, 1b, ···1n than the air heat exchanger 3c located at the tail-end position of group G1 is selected in some cases in advance as the air heat exchanger the piping resistance of which is the highest for the reason or the like that the branch pipes thereof connected to the water piping 2a and 2b are thin. The above selection is carried out on the basis of the empirical rule of the workers working at the time of the installation or actual measurement, and the selection result is stored in the internal memory 10a of the control section 10.

Subsequently, the flow rate regulating valves 4a, 4b, and 4c are fully opened by an operation to be carried out through the control section (not shown) of the load side devices, at the same time, the control section 10 totally closes the pressure-regulating valve 7 of the bypass piping 6, operates, in this state, the pump 80 of each of the heat source machines 1a, 1b, ···1n at the maximum frequency, and stores the correspondence at this time between the sensed flow rate (maximum flow rate) Qm of the flow rate sensor 5 and sensed differential pressure (sensed pressure difference) Pm of the differential pressure sensor 8 in the internal memory 10a as an intersection point Sm shown in FIG. 4.

Further, the control section 10 connects the intersection point Sn and intersection point Sm stored in the internal memory 10, whereby the control section 10 can detect an approximated quadratic curve approximately expressing a relationship between the flow rate Q of the water flowing on the load side and water pressure difference P between the both ends of the bypass piping 6 as the load side piping resistance characteristics of group G1 (S2).

Next, the control section 10 stores the detected load side piping resistance characteristics in the internal memory 10a in correlation with group G1 (step S3).

Then, the control section 10 determines whether or not all of groups G1, ···, GN have been selected (step S4) and, when all of groups have not been selected (NO of step S4), the control section 10 advances to the processing of step S2, and then the control section 10 stores the load side piping resistance characteristics of the selected groups in the internal memory 10a. When all of groups G1, ···, GN have been selected (YES of step S4), the control section 10 terminates the processing. Thereby, the load side piping resistance characteristics of all of groups are stored in the internal memory 10a. As described above, one set of load side piping resistance characteristics is acquired from each of groups G1, G2, ···GN, and hence the processing burden at the time of a trial operation can be reduced as compared with the case where the load side piping resistance characteristics are acquired with respect to all the air heat exchangers.

On the other hand, at the time of a normal operation (NO of step S1), the controller of the air heat exchangers 3a, 3b, 3c, 3d, 3e, 3f, ···3l, 3m, and 3n which are the loads controls the degree of opening of each of the flow rate regulating valves 4a, 4b, ···4n according to the required performance (difference between the indoor air temperature Ta and preset temperature Ts).

The greater the required performance of the air heat exchanger 3a, the greater the degree of opening of the flow rate regulating valve 4a is made (increase in flow rate) and, the smaller the required performance of the air heat exchanger 3a, the smaller the degree of opening of the flow rate regulating valve 4a is made (decrease in flow rate). With respect to each of the flow rate regulating valves 4b, 4c, 4d, 4e, 4f, ···4l, 4m, and 4n corresponding to the other air heat exchangers 3b, 3c, 3d, 3e, 3f, ···3l, 3m, and 3n, the degree of opening is controlled in the same manner. Concomitantly with the degree-of-opening control of the flow rate regulating valves on the load side, the flow rate Qt of the water actually flowing through the air heat exchangers 3a, 3b, 3c, 3d, 3e, 3f, ···3l, 3m, and 3n is sensed by the flow rate sensor 5.

The control section 10 obtains the target differential pressure (target pressure difference) Pt of the water between the both ends of the bypass piping 6 corresponding to the sensed flow rate Qt of the flow rate sensor 5 from the operational status of the air heat exchangers 3a, 3b, 3c, 3d, 3e, 3f, ···3l, 3m, and 3n and load side piping resistance characteristics sensed at the time of the trial operation and stored in the internal memory 10a. More specifically, the processing of the following steps S5 and S6 is executed.

The control section 10 acquires the operational status of the air heat exchangers 3a, 3b, 3c, 3d, 3e, 3f, ···3l, 3m, and 3n on the basis of, for example, opening and closing of the flow rate regulating valves 4a, 4b, 4c, 4d, 4e, 4f, ···4l, 4m, and 4n, and identifies groups including air heat exchangers in operation (step S5).

Next, the control section 10 selects one set of piping resistance characteristics from a plurality of sets of piping resistance characteristics of the identified groups (step S6). For example, when the air heat exchangers 3a, 3b, 3c, 3d, 3e, and 3f included in groups G1 and G2 are in operation, the control section 10 acquires a plurality of sets of load side piping resistance characteristics corresponding to groups G1 and G2, and selects the load side piping resistance characteristics corresponding to group G2 installed at a position farther from the heat source machines (having higher load side piping resistance characteristics) from these two sets of load side piping resistance characteristics.

Then, the control section 10 obtains the target differential pressure (target pressure difference) Pt of the water between the both ends of the bypass piping 6 corresponding to the sensed flow rate Qt of the flow rate sensor 5 from the selected load side piping resistance characteristics (step S7).

Next, the control section 10 controls the degree of opening of the pressure-regulating valve (bypass valve) 7 so that the obtained target differential pressure Pt can be realized (step S8).

The sensed differential pressure P of the differential pressure sensor 8 is set to the target differential pressure Pt, whereby water of an optimum flow rate commensurate with the sum total of the required flow rates of the air heat exchangers 3a, 3b, ···3n flows into the air heat exchangers 3a, 3b, ···3n, and the water superfluous for the air heat exchangers 3a, 3b, ···3n returns to the heat source machines in operation through the bypass piping 6.

Further, the control section 10 allocates the sensed flow rate Qt of the flow rate sensor 5 to the heat source machines in operation in an equalizing manner (step S9). The control section 10 detects the flow rate W of water flowing through each of the heat source machines in operation by calculation based on the sensed differential pressure of the differential pressure sensor 90 of each heat source machine in operation and heat exchanger resistance characteristics of the water heat exchangers 60 and 30 of each heat source machine in operation (step S10). The control section 10 controls the pump frequency in such a manner that the sensed flow rate W coincides with the aforementioned allocated requisite flow rate Wt (step S11).

According to the heat source system configured in the manner described above, the control section 10 identifies groups including air heat exchangers in operation on the basis of the operational status of the air heat exchangers 3a, 3b, 3c, 3d, 3e, 3f, ···3l, 3m, and 3n, selects one set of load side piping resistance characteristics from the plurality of sets of load side piping resistance characteristics of the identified groups, controls the degree of opening of the pressure-regulating valve 7 in such a manner that the sensed differential pressure P of the differential pressure sensor 8 coincides with the target differential pressure Pt obtained from the selected load side piping resistance characteristics, and can control the pump operation frequency of each of the heat source machines 1a, 1b, ···1n in operation on the basis of the sensed flow rate of the flow rate sensor 5. Accordingly, it is possible to appropriately operation-control the heat source machines according to the operational status of the air heat exchangers 3a, 3b, 3c, 3d, 3e, 3f, ···3l, 3m, and 3n.

The function will be described below assuming a case where, for example, only the air heat exchangers 3a, 3b, 3c, 3d, 3e, and 3f are in operation. When the load side piping resistance characteristics Cn of the air heat exchanger 3n and load side piping resistance characteristics Cr of the air heat exchanger 3f are compared with each other, the air heat exchanger 3n is installed at a position farther from the heat source machines than the air heat exchanger 43f and the piping resistance thereof is higher, and hence, as shown in FIG. 5, the load side piping resistance characteristics Cr lie on the lower side of the load side piping resistance characteristics Cn. Further, when the two sets of pump characteristics Pn and Pr passing through the intersection points of the load side piping resistance characteristics Cn and load side piping resistance characteristics Cr, and the required flow rate are compared with each other, the pump characteristics Pr lie on the lower side of the pump characteristics Pn. That is, regarding the pump characteristics of a case where the required flow rate is realized, it is possible to lower the pump characteristics by an amount corresponding to that indicated by the arrow. In other words, when the same required flow rate is to be realized, it is possible to lower the operation frequency F by changing the pump characteristics from the pump characteristics Pn to the pump characteristics Pr.

Accordingly, it is possible for the control section 10 to hold down the operation frequency F by an amount corresponding to that indicated by the arrow of FIG. 5 by changing the load side piping resistance characteristics Cn to the load side piping resistance characteristics Cr to thereby obtain the target differential pressure (target pressure difference) Pt. Accordingly, the heat source system can reduce the conveyance power and curb useless electric power consumption.

It should be noted that in the embodiment described above, although the description has been given in connection with a case where the heat source system is applied to an air-conditioning system, the case is not limited to this. The heat source system can also be applied to, for example, a plant system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

1a, 1b, ···1n ··· heat source machine, 2a, 2b ··· water piping (heating medium piping), 3a, 3b, ···3n ··· air heat exchanger (load side), 4a, 4b, ···4n ··· flow rate regulating valve, 5 ··· flow rate sensor, 6 ··· bypass piping, 7 ··· pressure-regulating valve, 8 ··· differential pressure sensor, 10 ··· control section, 10a ··· internal memory, 21, 41, 51, 71 ··· compressor, 30, 60 ··· water heat exchanger (heating medium heat exchanger), 80 ··· pump, 81 ··· inverter, 82 ··· commercial AC power source, and 90 ··· differential pressure sensor.

## Claims

1. A heat source system **characterized by** comprising:
a plurality of heat source machines each of which is provided with heating medium heat exchangers and a pump configured to circulate a heating medium between the heating medium heat exchangers and a plurality of loads, and is configured to heat or cool the heating medium flowing through the heating medium heat exchangers;
piping configured to return the heating medium flowing from the plurality of heat source machines to the plurality of loads to the plurality of heat source machines;
storage means for storing therein piping resistance characteristics at the time when the heating medium is sent from the plurality of heat source machines to the plurality of loads divided into groups in correlation with each divided group; and
control means for identifying groups each of which includes loads in operation from an operational status of the plurality of loads according to the required performance of the plurality of loads, selecting one set of piping resistance characteristics from a plurality of sets of piping resistance characteristics of the identified groups, and controlling a pump operation frequency of each of the heat source machines in operation on the basis of the selected piping resistance characteristics.

2. The heat source system of Claim 1, **characterized by** further comprising:
flow rate regulating valves each of which is configured to regulate a flow rate of the heating medium flowing through the load;
load side flow rate sensing means for sensing a flow rate of the heating medium flowing through the loads;
bypass piping configured to bypass the heating medium flowing from the plurality of heat source machines to the plurality of loads and return the bypassed heating medium to the plurality of heat source machines;
pressure difference sensing means for sensing a pressure difference of the heating medium between both ends of the bypass piping; and
a pressure-regulating valve configured to adjust a pressure difference of the heating medium between the both ends of the bypass piping, wherein
the control means controls the number of the heat source machines to be operated and an amount of adjustment of each of the flow rate regulating valves according to the required performance of the plurality of loads, identifies the groups each of which includes loads in operation from the operational status of the plurality of loads, selects one set of piping resistance characteristics from a plurality of sets of piping resistance characteristics of the identified groups, controls an amount of adjustment of the pressure-regulating valve in such a manner that a pressure difference sensed by the pressure difference sensing means coincides with a pressure difference calculated on the basis of the selected piping resistance characteristics, and controls a pump operation frequency of each of the heat source machines in operation on the basis of a sensed flow rate of the load side flow rate sensing means.

3. A heat source system control method of a heat source system including a plurality of heat source machines each of which is provided with heating medium heat exchangers and a pump configured to circulate a heating medium between the heating medium heat exchangers and a plurality of loads, and is configured to heat or cool the heating medium flowing through the heating medium heat exchangers, piping configured to return the heating medium flowing from the plurality of heat source machines to the plurality of loads to the plurality of heat source machines, and storage means for storing therein piping resistance characteristics at the time when the heating medium is sent from the plurality of heat source machines to the plurality of loads divided into groups in correlation with each divided group, **characterized by** comprising:
identifying groups each of which includes loads in operation from an operational status of the plurality of loads according to the required performance of the plurality of loads;
selecting one set of piping resistance characteristics from a plurality of sets of piping resistance characteristics of the identified groups; and
controlling a pump operation frequency of each of the heat source machines in operation on the basis of the selected piping resistance characteristics.
